# EUROPÄISCHE PATENTSCHRIFT

(11) **EP 2 852 015 B1**
(45) Veröffentlichungstag und Bekanntmachung des Hinweises auf die Patenterteilung: **21.02.2018**
(21) Anmeldenummer: 14169101.4
(22) Anmeldetag: 20.05.2014
(51) Int. Cl.: H02G 3/06, H02G 3/08

(54) **Kabeldurchführungseinrichtung**
Cable feedthrough device
Dispositif passe-câble

(30) Priorität: 18.09.2013 DE 102013218733
(43) Veröffentlichungstag der Anmeldung: 25.03.2015
(73) Patentinhaber: Bimed Teknik Aletler Sanayi ve Ticaret A.S., 34900 Büyükcekmece Istanbul (TR)
(72) Erfinder: Albukrek, Yilmaz, Yesilköy, Istanbul (TR) (TR)
(74) Vertreter: DREISS Patentanwälte PartG mbB

(56) Entgegenhaltungen:
- EP-A2- 2 518 849
- DE-A1- 2 744 273
- DE-A1- 4 325 420
- DE-B3-102011 006 312
- DE-C1- 4 225 263
- DE-T2- 60 114 978
- DE-U1- 29 811 259
- DE-U1-202009 007 636
- CENA Kunststoff GmbH: "Montage Einsteckverschraubung", , 3 November 2011 (2011-11-03), XP054976044, Retrieved from the Internet: URL:https://www.youtube.com/watch?v=upN2E9 qhqdY [retrieved on 2015-09-03]

## Beschreibung

Die Erfindung betrifft eine Kabeldurchführungseinrichtung, mit den Merkmalen des Oberbegriffs des Patentanspruchs 1, entsprechend DE 27 44 273 A1 oder DE 601 14 978 T2.

Aus der DE 20 2007 017 765 U1 ist eine als Anschlussarmatur bezeichnete Kabeldurchführungseinrichtung bekannt, welche mit einem Einführende in eine Öffnung einer Wand einführbar und dort mittels Rastelementen mit dem Rand der Öffnung verrastbar ist. Zur Sicherung der Kabeldurchführungseinrichtung werden ein die Rastelemente tragendes erstes Teil und ein auf einer Außenseite der Wand angeordnetes zweites Teil miteinander verschraubt, sodass Rastflächen der Rastelemente gegen die Innenseite der Wand gedrückt werden. Im Zuge der Verschraubung des zweiten Teils mit dem ersten Teil soll eine Verdrehung des ersten Teils dadurch verhindert werden können, dass die Rastelemente nach radial außen weisende Flächen aufweisen, welche unter Eigenspannung stehend reibschlüssig an der hohlzylindrischen Begrenzungsfläche der Öffnung der Wand anliegen. Hierdurch soll eine Verschraubung des zweiten Teils mit dem ersten Teil von der Außenseite der Wand her ermöglicht werden.

Es hat sich herausgestellt, dass der vorstehend genannte Reibschluss Nachteile hat. Ein solcher Reibschluss erfordert eine hohe Maßgenauigkeit sowohl der nach radial außen weisenden Flächen der Rastelemente als auch der hohlzylindrischen Begrenzungsfläche der Öffnung der Wand. Zudem sind auch bei Einhaltung einer hohen Maßgenauigkeit die durch die Eigenspannung der Rastelemente erreichbaren Reibkräfte gering. In der Praxis kann es daher erforderlich sein, das erste Teil, welches die Rastelemente trägt, benachbart zu der Innenseite der Wand mit einem Werkzeug oder mit einer Hand gegen eine Verdrehung zu sichern. Hierdurch geht der beabsichtigte Vorteil einer Montagemöglichkeit, bei welcher die Kabeldurchführungseinrichtung ausschließlich von der Außenseite der Wand her gehandhabt wird, verloren.

Hiervon ausgehend liegt der vorliegenden Erfindung die Aufgabe zugrunde, eine Kabeldurchführungseinrichtung zu schaffen, welche einfach herstellbar und montierbar ist.

Diese Aufgabe wird bei einer Kabeldurchführungseinrichtung der eingangs genannten Art erfindungsgemäß durch die kennzeichnenden Merkmale des Patentanspruchs 1 gelöst.

Erfindungsgemäß ist es möglich, den Befestigungskörper mit einer Reibfläche gegen die Außenseite der Wand zu drücken, sodass der Reibschluss zwischen der Reibfläche und der Außenseite der Wand eine Verdrehung des Befestigungskörpers verhindert. Die zwischen dem Reibkörper und der Außenseite der Wand wirkende Reibkraft ergibt sich aus dem Reibungskoeffizienten zwischen der Reibfläche und der Außenseite der Wand und der mittels des Gehäusekörpers aufgebrachten Andrückkraft.

Der Gehäusekörper wirkt unter Zwischenschaltung eines Federelements auf die Reibfläche. Das Federelement dient zur Übertragung des auf den Gehäusekörper ausgeübten Drucks und ermöglicht es gleichzeitig, den sich im Zuge der Verschraubung verändernden Abstand des Gehäusekörpers zu der Reibfläche auszugleichen.

Bei der erfindungsgemäßen Kabeldurchführungseinrichtung ist es nicht erforderlich, eine Wandöffnung mit engen Toleranzen vorzusehen, da die Reibfläche nicht mit der hohlzylindrischen Begrenzungsfläche der Wandöffnung, sondern mit der Außenseite der Wand zusammenwirkt.

Darüber hinaus ist es vorteilhaft, dass nach Verrastung des Hinterschnittelements mit der Innenseite der Wand lediglich ein Bauteil der Kabeldurchführungseinrichtung gehandhabt werden muss, nämlich der Gehäusekörper, um den Befestigungskörper fest mit der Wand zu verbinden. Bei der Handhabung des Gehäusekörpers wird dieser gedreht; mittels des Federelements wird gleichzeitig von dem Gehäusekörper eine Druckkraft auf die Reibfläche ausgeübt, sodass der verdrehsicher mit der Reibfläche verbundene Befestigungskörper während der Verschraubung nicht mitgedreht wird.

Insgesamt wird eine einfach montierbare Kabeldurchführungseinrichtung geschaffen, welche mit wenigen Montageschritten und nur von einer Außenseite der Wand her montierbar ist (also ohne Zuhilfenahme eines Werkzeugs von der Innenseite der Wand her). Die Bauteile der erfindungsgemäßen Kabeldurchführungseinrichtung erlauben relativ großzügige Toleranzen; dies gilt auch für die Geometrie der Öffnung der Wand, an welcher die Kabeldurchführungseinrichtung montiert werden soll.

Eine bevorzugte Ausführungsform sieht vor, dass die Reibfläche ringförmig ist. Auf diese Weise wird entlang eines Umfangs um den Befestigungskörper herum ein Reibschluss mit der Außenseite der Wand hergestellt.

Für einen besonders guten Reibschluss mit der Außenseite der Wand ist es bevorzugt, dass die Reibfläche aus einem Elastomermaterial hergestellt ist.

Die Reibfläche ist von einer Ringscheibe gebildet. Es ist denkbar, dass eine solche Ringscheibe einstückig mit dem Befestigungskörper ausgebildet ist. Bevorzugt ist es jedoch, dass die Ringscheibe von dem Befestigungskörper separat bereitgestellt ist. Dies ermöglicht eine einfache Fertigung des Befestigungskörpers und der Ringscheibe, insbesondere aus unterschiedlichen Materialien. Es ist aber auch denkbar, Befestigungskörper und Ringscheibe einstückig miteinander herzustellen, wobei der Befestigungskörper und die Ringscheibe aus identischen oder unterschiedlichen Materialien hergestellt werden, beispielsweise unter Verwendung eines (Mehrkomponenten-) Spritzgießverfahrens.

Eine Verdrehsicherung zwischen einer von dem Befestigungskörper separat bereitgestellten Ringscheibe und dem Befestigungskörper kann beispielsweise über in Verdrehrichtung wirksame Zähne oder Vorsprünge von Ringscheibe und/oder Befestigungskörper realisiert sein.

Bei einer besonders bevorzugten Ausführungsform ist vorgesehen, dass die Ringscheibe nach Fertigmontage der Kabeldurchführungseinrichtung als Dichtung wirksam ist, welche einen Mediendurchtritt durch die Öffnung der Wand hindurch verhindert. Auf diese Weise dient die Ringscheibe mit ihrer Reibfläche nicht nur als Montagehilfsmittel, sondern hat nach Abschluss der Montage eine dauerhafte Dichtfunktion. Es ist aber auch denkbar, diese Dichtfunktion durch ein separat bereitgestelltes Dichtelement zu realisieren.

Bei einer bevorzugten Ausführungsform ist vorgesehen, dass das Federelement einen ringförmigen Kraftübertragungsabschnitt zur Druckbeaufschlagung der Reibfläche aufweist. Dies ermöglicht es, eine von dem Gehäusekörper auf das Federelement ausgeübte Druckkraft entlang eines geschlossenen Umfangs auf die Reibfläche zu übertragen.

Ferner ist es bevorzugt, wenn das Federelement Federarme zur Abstützung an dem Gehäusekörper aufweist. Die Federarme übertragen eine von dem Gehäusekörper in Richtung auf die Reibfläche ausgeübte Druckkraft. Dabei stehen die Federarme vorzugsweise nur mit einer geringen Kontaktfläche mit dem Gehäusekörper in Kontakt, sodass die Federarme an einer entsprechenden Gegenfläche des Gehäusekörpers entlanggleiten können. Dies hat den Vorteil, dass das Federelement sich bei einer Drehung des Gehäusekörpers nicht gemeinsam mit dem Gehäusekörper drehen muss, sondern stillstehen kann und sich somit nicht relativ zu der (in Drehrichtung ruhenden) Reibfläche bewegt.

Bei einer weiteren bevorzugten Ausführungsform der Erfindung ist vorgesehen, dass der Befestigungskörper und der Gehäusekörper mittels einer Verrastung verliersicher aneinander gehalten sind. Dies ermöglicht es, die Kabeldurchführungseinrichtung in einem Lieferzustand als Baueinheit bereitzustellen.

Eine besonders einfache Vormontage der Kabeldurchführungseinrichtung ergibt sich dadurch, dass das Federelement in einem Vormontagezustand der Kabeldurchführungseinrichtung einen Gewindeabschnitt des Gehäusekörpers so weit von einem Gewindeabschnitt des Befestigungskörpers beabstandet, dass die beiden Gewindeabschnitte nicht miteinander in Eingriff stehen. Dies ermöglicht es, zunächst den Befestigungskörper mit einer Öffnung einer Wand zu verrasten, ohne dass das Federelement bereits eine Druckkraft auf die Reibfläche ausübt. Außerdem kann auf diese Weise eine haptische Rückmeldung geschaffen werden, dass nämlich der Gehäusekörper und der Befestigungskörper noch nicht miteinander verschraubt sind.

Ausgehend von dem vorstehend beschriebenen Vormontagezustand sind die Gewindeabschnitte entgegen der Wirkung des Federelements durch Aufdrücken des Gehäusekörpers in Richtung auf den Befestigungskörper miteinander in Eingriff bringbar. Dies ermöglicht eine haptische Rückmeldung darüber, dass eine Verschraubung des Gehäusekörpers mit dem Befestigungskörper erfolgen soll und dass hierfür zunächst eine Druckkraft aufgebracht werden muss, um das Federelement anteilig zu komprimieren und um die Gewindeabschnitte des Gehäusekörpers und des Befestigungskörpers miteinander in Eingriff zu bringen. Im Zuge der weiteren Verschraubung des Gehäusekörpers mit dem Befestigungskörper steigt das erforderliche Anzugsmoment, da das Federelement zunehmend stärker komprimiert wird. Das Federelement wiederum wirkt auch in einem fertig montierten Zustand auf den Gehäusekörper und bewirkt eine Sicherung des Gewindeabschnitts des Gehäusekörpers an dem Gewindeabschnitt des Befestigungskörpers.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Fig. 1: eine Seitenansicht einer Ausführungsform einer Kabelverschraubung in einem Vormontagezustand;
- Fig. 2: eine Seitenansicht der Kabelverschraubung gemäß Fig. 1 in einem Fertigmontagezustand; und
- Fig. 3: eine Draufsicht einer Ringscheibe der Kabelverschraubung gemäß Fig. 1.

Eine Ausführungsform einer Kabeldurchführungseinrichtung ist in der Zeichnung insgesamt mit dem Bezugszeichen 10 bezeichnet. Die Kabeldurchführungseinrichtung 10 erstreckt sich längs einer Kabeldurchführungsachse 12 zur Durchführung eines (nicht dargestellten) Kabels.

Die Kabeldurchführungseinrichtung 10 weist einen Befestigungskörper 14, einen Gehäusekörper 16 und eine Hutmutter 18 auf. Die Teile 14, 16 und 18 sind längs der Kabeldurchführungsachse 12 hohl und ermöglichen jeweils den Durchtritt eines Kabelabschnitts.

Die Kabeldurchführungseinrichtung erstreckt sich zwischen einem äußeren Ende 20 (auf Höhe der Hutmutter 18) und einem inneren Ende 22 (an einem freien Ende des Befestigungskörpers 14).

Der Befestigungskörper 14 ist mit dem Ende 22 voran in eine vorzugsweise zylindrische Öffnung 24 einer Wand 26 einsetzbar. Die Wand 26 weist eine Außenseite 28 und eine Innenseite 30 auf. Die Wand 26 trennt eine Umgebung 32 von einem Innenraum 34, beispielsweise eines Gehäuses.

Der Gehäusekörper 16 weist benachbart zu dem äußeren Ende 20 Klemmlamellen 36 auf. Ferner weist der Gehäusekörper 16 ein Außengewinde 38 auf, welches mit einem Innengewinde 40 der Hutmutter 18 verschraubbar ist. Im Zuge einer Verschraubung der Hutmutter 18 mit dem Gehäusekörper 16 werden die Klemmlamellen 36 nach radial innen gedrückt. Auf diese Weise gelangt ein radial innen angeordnetes Dichtelement 42 in an sich bekannter Weise in dichtende Anlage mit einem längs der Kabeldurchführungsachse 12 verlaufenden Kabel.

Der Gehäusekörper 16 weist einen Abschnitt 44 auf, welcher mit einer Handhabungsfläche 46 versehen ist, beispielsweise einem Sechskantprofil. Ferner ist auf Höhe des Abschnitts 44 ein Innengewinde 48 vorgesehen, welches mit einem Außengewinde 50 des Befestigungskörpers 14 verschraubbar ist.

Der Gehäusekörper 16 und der Befestigungskörper 14 sind mittels einer ringförmig umlaufenden Verrastung 52 verliersicher aneinander gehalten.

Der Gehäusekörper 16 weist eine der Wand 26 zugewandte Stirnfläche 54 auf, welche von einem ringförmigen Steg 56 gebildet ist. Der Steg 56 begrenzt einen Ringraum 58 mit einer Ringfläche 60, welche zur Abstützung eines Federelements 62 dient.

Das Federelement 62 weist einen sich um die Kabeldurchführungsachse 12 erstreckenden ringförmigen Kraftübertragungsabschnitt 64 auf. Von dem Kraftübertragungsabschnitt 64 aus erstrecken sich Federarme 66 in Richtung auf den Gehäusekörper 16. Die Federarme 66 stützen sich mit einem oberen Ende 68 an der Fläche 60 des Gehäusekörpers 16 ab.

Der Kraftübertragungsabschnitt 64 dient zur Anlage an eine Ringscheibe 70. Diese ist aus einem Elastomermaterial hergestellt und weist eine der Außenseite 28 der Wand 26 zugewandte Reibfläche 72 auf.

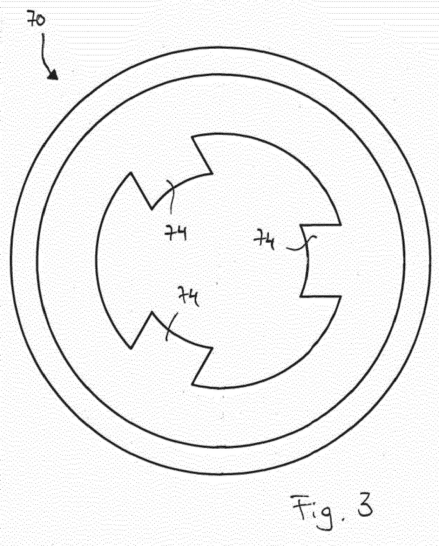

Die Ringscheibe 70 weist mindestens einen nach radial innen weisenden Vorsprung 74 auf, welche in eine Ausnehmung 76 des Befestigungskörpers 14 eintaucht und somit die Ringscheibe 70 relativ zu dem Befestigungskörper 14 gegen Verdrehung um die Kabeldurchführungsachse 12 sichert. Beispielsweise weist die Ringscheibe drei Vorsprünge 74 auf (vergleiche Fig. 3), die in drei Ausnehmungen 76 des Befestigungskörpers 14 eintauchen.

Der Befestigungskörper 14 weist benachbart zu dem Ende 22 als Rastnasen ausgebildete Hinterschnittelemente 78 auf. Vorzugsweise sind mehrere, um den Umfang des Befestigungskörpers 14 verteilt angeordnete Hinterschnittelemente 78 vorgesehen. Diese weisen jeweils eine sich parallel zu der Innenseite 30 der Wand 26 erstreckende Rastfläche 80 auf sowie geneigte Einführflächen 82, welche im Zuge des Einführens des Endes 22 des Befestigungskörpers 14 in die Öffnung 24 der Wand 26 eine nach radial innen gerichtete Verformung der Hinterschnittelemente 78 bewirken.

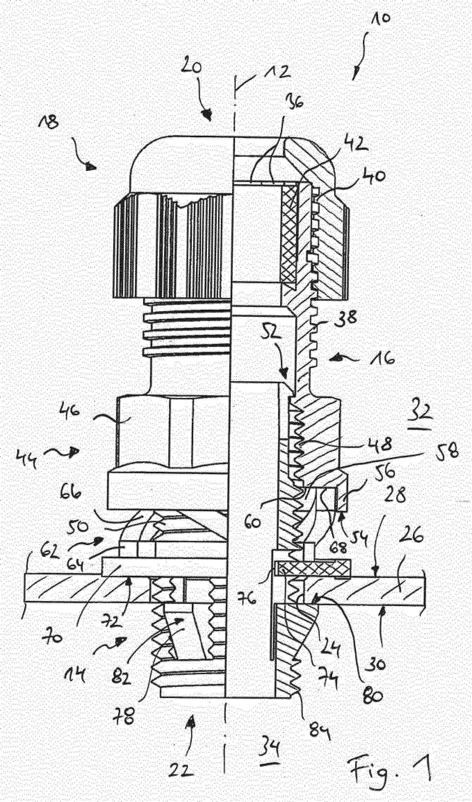

In Figur 1 ist die Kabeldurchführungseinrichtung in einem Vormontagezustand dargestellt. In diesem Zustand drückt das Federelement 62 den Gehäusekörper 16 von der Wand 26 weg. Die Gewindeabschnitte 48 und 50 des Gehäusekörpers 16 bzw. des Befestigungskörpers 14 stehen (noch) nicht miteinander in Eingriff.

Ausgehend von dem in Figur 1 dargestellten Zustand bewirkt eine von einem Monteur auf den Abschnitt 44 in Richtung auf die Wand 26 ausgeübte Druckkraft, dass das Federelement 62 komprimiert wird, bis die einander zugewandten Enden der Gewindeabschnitte 48 und 50 miteinander in Kontakt kommen. Eine anschließende Verdrehung des Gehäusekörpers 16 durch den Monteur um die Kabeldurchführungsachse 12 bewirkt ein Verschrauben der Gewindeabschnitte 48 und 50. Während der Verschraubung bewegt sich der Gehäusekörper 16, der Steigung der Gewindeabschnitte 48 und 50 entsprechend, in Richtung auf die Wand 26. Während dieser Verschraubung gleiten die Abschnitte 68 des Federelements 62 entlang der Fläche 60 des Gehäusekörpers 16; die Federarme 66 übertragen eine von dem Gehäusekörper 16 ausgeübte Druckkraft auf den Kraftübertragungsabschnitt 64. Der Kraftübertragungsabschnitt 64 wiederum drückt die Ringscheibe 70 gegen die Wand 26, sodass zwischen der Reibfläche 72 und der Außenseite 28 der Wand 26 eine reibschlüssige Verbindung hergestellt wird.
Die zwischen der Reibfläche 72 und der Außenseite 28 der Wand 26 wirkende Reibkraft steigt mit dem Druck an, den das Federelement 62 mit seinem Kraftübertragungsabschnitt 64 auf die Ringscheibe 70 ausübt. Diese Kraft wiederum ist abhängig von der im Zuge der Verdrehung des Gehäusekörpers 16 zunehmenden Verformung der Federarme 66 des Federelements 62. Das für diese zunehmende Verformung erforderliche Drehmoment zur Verdrehung des Gehäusekörpers 16 erhöht sich dementsprechend. Die Reibkraft zwischen der Reibfläche 72 und der Außenseite 28 der Wand 26, der Druck des Federelements 62 auf die Ringscheibe 70 und das zur Verdrehung des Gehäusekörpers erforderliche Drehmoment stehen vorzugsweise miteinander in einem proportionalen Zusammenhang.

Da der Befestigungskörper 14 mittels der Ausnehmungen 76 und der radialen Vorsprünge 74 der Ringscheibe 70 relativ zu der Ringscheibe 70 verdrehgesichert ist, bewirkt der Reibschluss zwischen der Reibfläche 72 der Ringscheibe 70 und der Außenseite 28 der Wand 26, dass sich der Befestigungskörper 14 während des Aufschraubens des Gehäusekörpers 16 nicht gemeinsam mit dem Gehäusekörper 16 dreht. Auf diese Weise ist es nicht erforderlich, während der Verschraubung des Gehäusekörpers 16 mit dem Befestigungskörper 14 den Befestigungskörper 14 festzuhalten, beispielsweise im Bereich des Endes 22.

Es ist optional möglich, dass der Befestigungskörper 14 benachbart zu dem Ende 22 ein Zusatzgewinde 84 aufweist, auf welches bei Bedarf eine (nicht dargestellte) Sicherungsmutter aufschraubbar ist, welche an den Einführflächen 82 der Hinterschnittelemente 78 zur Anlage kommen oder welche diese nach radial innen verformen, sodass die Sicherungsmutter mit der Innenseite 30 der Wand 26 in Anlage gebracht wird.

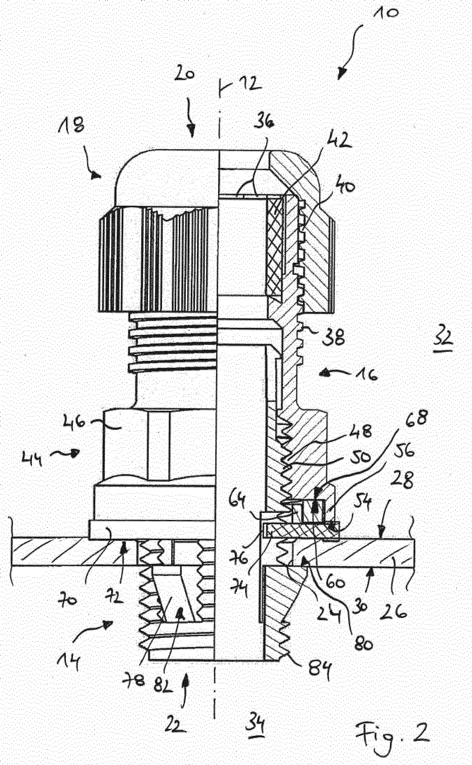

In Figur 2 ist ein Fertigmontagezustand der Kabeldurchführungseinrichtung 10 dargestellt. In diesem Zustand ist das Federelement 62 komprimiert. Es ist, wie in dem in Figur 2 dargestellten Ausführungsbeispiel, möglich, dass der Fertigmontagezustand der Kabeldurchführungseinrichtung 10 damit einhergeht, dass die Stirnfläche 54 des Gehäusekörpers 16 in Anlage mit der Ringscheibe 70 steht. Hierdurch ist eine besonders sichere Befestigung des Befestigungskörpers 14 an der Wand 26 gewährleistet. Die Ringscheibe 70 dient nach Abschluss der Montage der Kabeldurchführungseinrichtung 10 als Dichtelement, welches einen Mediendurchtritt durch die Öffnung 24 der Wand 26 hindurch, beispielsweise aus der Umgebung 32 in Richtung Innenraum 34, verhindert.

## Patentansprüche

1. Kabeldurchführungseinrichtung (10), mit einem in eine Öffnung (24) einer Wand (26) einführbaren Befestigungskörper (14), welcher einen Gewindeabschnitt (50) und mindestens ein mit einer Innenseite (30) der Wand (26) verrastbares Hinterschnittelement (78) aufweist, mit einem mit dem Befestigungskörper (14) verschraubbaren Gehäusekörper (16), welcher einen Gewindeabschnitt (48) aufweist, zur vorzugsweise dichtenden Aufnahme eines Kabels, wobei sich die Kabeldurchführungseinrichtung (10) längs einer Kabeldurchführungsachse (12) erstreckt und der Befestigungskörper (14) und der Gehäusekörper (16) längs dieser Kabeldurchführungsachse (12) zur Durchführung eines Kabels hohl sind, mit einer Ringscheibe (70), welche relativ zu dem Befestigungskörper (14) gegen Verdrehung um die Kabeldurchführungsachse (12) gesichert ist und welche eine Reibfläche (72) aufweist, welche nach Einführen des Befestigungskörpers (14) in eine Öffnung (24) einer Wand (26) mit einer Außenseite (28) der Wand (26) zusammenwirkt, und mit einem Federelement (62), welches zur Übertragung eines auf den Gehäusekörper (16) ausgeübten Drucks auf die Reibfläche (72) dient, sodass während der Verschraubung des Gehäusekörpers (16) mit dem Befestigungskörper (14) die Reibfläche (72) mittels des Gehäusekörpers (16) unter Zwischenschaltung des Federelements (62) druckbeaufschlagt ist, **dadurch gekennzeichnet, dass** nach Einführen des Befestigungskörpers (14) in eine Öffnung (24) einer Wand (26) die Ringscheibe (70) mit der Reibfläche (72) an der Außenseite (28) der Wand (26) anliegt und das an der Ringscheibe (70) anliegende Federelement (62) den Gehäusekörper (16) von der Wand (26) wegdrückt und dabei den Gewindeabschnitt (48) des Gehäusekörpers (16) so weit vom Gewindeabschnitt (50) des Befestigungskörpers (14) beabstandet, dass die beiden Gewindeabschnitte (48, 50) nicht miteinander in Eingriff stehen und dass die Gewindeabschnitte (48, 50) entgegen der Wirkung des Federelements (62) durch Aufdrücken des Gehäusekörpers (16) in Richtung auf den Befestigungskörper (14) miteinander in Eingriff bringbar sind.

2. Kabeldurchführungseinrichtung (10) nach Anspruch 1, **dadurch gekennzeichnet, dass** die Reibfläche (72) ringförmig ist.

3. Kabeldurchführungseinrichtung (10) nach einem der voranstehenden Ansprüche, **dadurch gekennzeichnet, dass** die Reibfläche (72) aus einem Elastomermaterial hergestellt ist.

4. Kabeldurchführungseinrichtung (10) nach einem der voranstehenden Ansprüche, **dadurch gekennzeichnet, dass** die Ringscheibe (70) von dem Befestigungskörper (14) separat bereitgestellt ist.

5. Kabeldurchführungseinrichtung (10) nach Anspruch 4, **dadurch gekennzeichnet, dass** die Ringscheibe (70) nach Fertigmontage der Kabeldurchführungseinrichtung (10) als Dichtung wirksam ist, welche einen Mediendurchtritt durch die Öffnung (24) der Wand (26) hindurch verhindert.

6. Kabeldurchführungseinrichtung (10) nach einem der voranstehenden Ansprüche, **dadurch gekennzeichnet, dass** das Federelement (62) einen ringförmigen Kraftübertragungsabschnitt (64) zur Druckbeaufschlagung der Reibfläche (72) aufweist.

7. Kabeldurchführungseinrichtung (10) nach einem der voranstehenden Ansprüche, **dadurch gekennzeichnet, dass** das Federelement (62) Federarme (66) zur Abstützung an dem Gehäusekörper (16) aufweist.

8. Kabeldurchführungseinrichtung (10) nach einem der voranstehenden Ansprüche, **dadurch gekennzeichnet, dass** der Befestigungskörper (14) und der Gehäusekörper (16) mittels einer Verrastung (52) verliersicher aneinander gehalten sind.

## Claims

1. Cable feedthrough device (10), with a fixing body (14) which can be introduced into an opening (24) in a wall (26), said fixing body having a threaded section (50) and at least one undercut element (78) which can be brought into engagement with an inner side (30) of the wall (26), with a housing body (16) which can be screwed together with the fixing body (14), said housing body having a threaded section (48) for preferably sealing accommodation of a cable, wherein the cable feedthrough device (10) extends along a cable feedthrough axis (12) and the fixing body (14) and the housing body (16) are hollow along this cable feedthrough axis (12) for feedthrough of a cable, with a annular washer (70) which is secured relative to the fixing body (14) against rotation around the cable feedthrough axis (12) and which has a friction surface (72) which, following introduction of the fixing body (14) into an opening (24) in a wall (26), interacts with an outer side (28) of the wall (26), and with a spring element (62) which serves to transmit a pressure applied to the housing body (16) to the friction surface (72), so that as the housing body (16) is screwed together with the fixing body (14) pressure is applied to the friction surface (72) by means of the housing body (16) via the spring element (62), **characterised in that**, following introduction of the fixing body (14) into an opening (24) in a wall (26), the friction surface (72) of the annular washer (70) rests against the outer side (28) of the wall (26) and the spring element (62) resting against the annular washer (70) presses the housing body (16) away from the wall (26) and the threaded section (48) of the housing body (16) is thereby spaced so far apart from the threaded section (50) of the fixing body (14) that the two threaded sections (48, 50) do not engage with one another and that the threaded sections (48, 50) can be brought into engagement with one another contrary to the effect of the spring element (62) by pressing the housing body (16) in the direction of the fixing body (14).

2. Cable feedthrough device (10) according to claim 1, **characterised in that** the friction surface (72) is annular in shape.

3. Cable feedthrough device (10) according to one of the preceding claims, **characterised in that** the friction surface (72) is made of an elastomeric material.

4. Cable feedthrough device (10) according to one of the preceding claims, **characterised in that** the annular washer (70) is provided separately from the fixing body (14).

5. Cable feedthrough device (10) according to claim 4, **characterised in that** following final assembly of the cable feedthrough device (10) the annular washer (70) acts as a seal which prevents media from passing through the opening (24) in the wall (26).

6. Cable feedthrough device (10) according to one of the preceding claims, **characterised in that** the spring element (62) has an annular force transmission section (64) for applying pressure to the friction surface (72).

7. Cable feedthrough device (10) according to one of the preceding claims, **characterised in that** the spring element (62) has spring arms (66) to support it on the housing body (16).

8. Cable feedthrough device (10) according to one of the preceding claims, **characterised in that** the fixing body (14) and the housing body (16) are held together securely means of a snap-locking mechanism (52).

## Revendications

1. Dispositif passe-câble (10) comprenant un corps de fixation (14) pouvant être introduit dans une ouverture (24) d'une paroi (26), et qui comporte un segment fileté (50) et au moins un élément à contre-dépouille (78) pouvant être encliqueté sur la face interne (30) de la paroi (26), un corps de boîtier (16) pouvant être vissé sur le corps de fixation (14) et qui comporte un segment fileté (48) permettant la réception de préférence étanche d'un câble, le dispositif passe-câble (10) s'étendant le long d'un axe de passage de câble (12) et le corps de fixation (14) et le corps de boîtier (16) étant creux le long de cet axe de passage de câbles (12) pour permettre le passage d'un câble, un disque annulaire (70) qui est bloqué en rotation autour de l'axe de passage de câble (12) par rapport au corps de fixation (14) et qui comporte une surface de friction (72) qui coopère, après introduction du corps de fixation (14) dans une ouverture (24) de la paroi (26), avec la face externe (28) de cette paroi (26), ainsi qu'un élément élastique (62) ayant pour fonction de transmettre une pression exercée sur le corps de boîtier (16) sur la surface de friction (72), de sorte que, pendant le vissage du corps de boîtier (16) sur le corps de fixation (14) la surface de friction (72) soit sollicitée en pression par le corps de boîtier (16) avec interposition de l'élément élastique (62), **caractérisé en ce qu'**après introduction du corps de fixation (14) dans l'ouverture (24) de la paroi (26), le disque annulaire (70) s'applique par sa surface de friction (72) sur la face externe (28) de la paroi (26), et que l'élément élastique (62) s'appliquant sur le disque annulaire (70) repousse le corps de boîtier (16) de la paroi (26), et écarte ainsi le segment fileté (48) du corps de boîtier (16) suffisamment du segment fileté (50) du corps de fixation (14) pour que les deux segments filetés (48, 50) ne viennent pas en prise l'un avec l'autre, et que les segments filetés (48, 50) puissent être mis en prise l'un avec l'autre contre l'action de l'élément élastique (62) par poussée du corps de boîtier (16) en direction du corps de fixation (14).

2. Dispositif passe-câble (10) conforme à la revendication 1, **caractérisé en ce que** la surface de friction (72) est une surface annulaire.

3. Dispositif passe-câble (10) conforme à l'une des revendications précédentes, **caractérisé en ce que** la surface de friction (72) est réalisée en un matériau élastomère.

4. Dispositif passe-câble (10) conforme à l'une des revendications précédentes, **caractérisé en ce que** le disque annulaire (70) est obtenue séparément du corps de fixation (14).

5. Dispositif passe-câble (10) conforme à la revendication 4, **caractérisé en ce qu'**après achèvement du montage du dispositif passe-câble (10) le disque annulaire (70) constitue un joint d'étanchéité qui empêche le passage de fluide au travers de l'ouverture (24) de la paroi (26).

6. Dispositif passe-câble (10) conforme à l'une des revendications précédentes, **caractérisé en ce que** l'élément élastique (62) comporte un segment de transmission de force annulaire (64) pour permettre la sollicitation en pression de la surface de friction (72).

7. Dispositif passe-câble (10) conforme à l'une des revendications précédentes, **caractérisé en ce que** l'élément élastique (62) comporte des bras élastiques (66) lui permettant de s'appuyer contre le corps de boîtier (16).

8. Dispositif passe-câble (10) conforme à l'une des revendications précédentes, **caractérisé en ce que** le corps de fixation (14) et le corps de boîtier (16) sont maintenus l'un sur l'autre pour empêcher leur perte au moyen d'un organe d'encliquetage (52).
